# EUROPÄISCHE PATENTANMELDUNG

(11) **EP 2 412 915 A2**
(43) Veröffentlichungstag der Anmeldung: **01.02.2012**
(21) Anmeldenummer: 11175400.8
(22) Anmeldetag: 26.07.2011
(51) Int. Cl.: E06B 9/264

(54) **Wendefenster**

(30) Priorität: 27.07.2010 AT 12552010
(71) Anmelder: IFN-Holding AG, 4050 Traun (AT)
(72) Erfinder: Hochreiter, Herbert, 4048 Puchenau (AT)
(74) Vertreter: Burger, Hannes

(57) **Zusammenfassung**

Die Erfindung betrifft ein Wendefenster (1) oder eine Wendetür mit einem Blendrahmen (12) und einem Flügelrahmen (11), der auf die Einbaulage eines Fensters oder einer Tür bezogen eine erste, äußere Oberfläche (22) und eine zweite, innere, der ersten Oberfläche (22) gegenüberliegende Oberfläche (23) aufweist, und der eine Mehrfachverglasung (2) stützt, die zumindest zwei Glaselemente (3, 4) mit unterschiedlicher Wärmedurchlässigkeit und/oder Lichtdurchlässigkeit aufweist, die in ihrer relativen Lage zur ersten, äußeren Oberfläche (22) und zur zweiten, inneren Oberfläche (23) vertauschbar am Flügelrahmen (22) oder am Blendrahmen (23) gehaltert sind, wobei zwischen den Glaselementen (3, 4) eine Sonnenschutzeinrichtung (26) angeordnet ist.

## Beschreibung

Die Erfindung betrifft ein Wendefenster bzw. eine Wendetür mit einem Blendrahmen und einem Flügelrahmen, der auf die Einbaulage eines Fensters oder einer Tür bezogen eine erste, äußere Oberfläche und eine zweite, innere, der ersten Oberfläche gegenüberliegende Oberfläche aufweist, und der eine Mehrfachverglasung stützt, die zumindest zwei Glaselemente mit unterschiedlicher Wärmedurchlässigkeit und/oder Lichtdurchlässigkeit aufweist, die in ihrer relativen Lage zur ersten, äußeren Oberfläche und zur zweiten, inneren Oberfläche vertauschbar am Flügelrahmen gehaltert sind.

Wendefenster sind bereits aus dem Stand der Technik bekannt. So ist z.B. ein dreifach verglastes Wendefenster bekannt, bei dem eine der drei Glasscheiben einseitig eine wärmestrahlungsreflektierende Beschichtung aufweist. Im Sommer bei im allgemeinen höheren Aussentemperaturen wird das Fenster so angeordnet, dass von aussen auftreffende Wärmestrahlung reflektiert wird, während im Winter bei im allgemeinen niedrigerer Aussentemperatur das Fenster in gewendeter Stellung zur Verminderung der Wärmeabstrahlung aus dem Gebäudeinneren verwendet wird.

Die DE 36 24 021 A1 beschreibt ein Fenster oder eine Tür mit einer Mehrfachverglasung mit einseitig wärmereflektierenden Eigenschaften, mit einem festen Blendrahmen und mit einem die Scheiben haltenden Flügelrahmen, wobei in Anpassung an den vorherrschenden Temperaturgradienten zwischen dem Gebäudeinneren und dem Äußeren eine Seite des Fensters durch Wenden wechselweise entweder zur Außenseite oder zur Innenseite hinweisend angeordnet werden kann. Dieses Fenster bzw. diese Tür weist weiters einen zusätzlichen, innenseitig an oder in dem Blendrahmen angeordneten, um wenigstens 90 ° um eine flügelkantennahe Achse verschwenkbaren Dreh- oder Drehkippflügel als Innenflügel auf, der wenigstens eine weitere Scheibe trägt und die Fugen zwischen Blendrahmen und Flügelrahmen dichtend übergreift. Es soll damit die Abdichtung zwischen dem Blendrahmen und dem Flügelrahmen verbessert werden.

Bei den bisher bekannten Wendefenster oder Wendetüren wurde versucht, einerseits im Winter durch eine spezielle Beschichtung den Wärmeverlust durch das Fenster zu verringern und andererseits im Sommer durch dieselbe Beschichtung die Wärmeeinstrahlung in den Raum zu reduzieren.

Der vorliegenden Erfindung liegt die Aufgabe zugrunde, eine Wendefenster bzw. eine Wendetür zu schaffen, mit dem bzw. mit der die mit der Sonneneinstrahlung verbunden Energie genutzt werden kann.

Diese Aufgabe der Erfindung wird mit dem eingangs genannten Wendefenster bzw. der eingangs genannten Wendetür dadurch gelöst, dass zwischen den Glaselementen eine Sonnenschutzeinrichtung angeordnet ist.

Obwohl dies im ersten Moment widersprüchlich erscheint, da ja üblicherweise Sonnenschutzvorrichtungen dazu verwendet werden, um das Sonnenlicht möglichst nach außen zu reflektieren, diese also ähnlich wirken, wie die aus dem voranstehend angeführten Stand der Technik bekannte Beschichtung, wird mit der Sonnenschutzeinrichtung bei der Erfindung allerdings erreicht, dass die einfallende Sonnenstrahlung in einen Bereich am Fenster umgelenkt werden kann, in dem eine Vorrichtung zur Sonnenenergienutzung angeordnet ist. Es wird also mit dem erfindungsgemäßen Wendefenster oder der Wendetür erreicht, dass je nach Stellung des Wendefensters oder der Wendetür mehr oder weniger Energie genutzt werden kann, wobei im Sommer das Glaselement mit der geringeren Lichtdurchlässigkeit bzw. der geringeren Wärmedurchlässigkeit sich vorzugsweise raumseitig befindet, um möglichst viel Sonnenenergie zu nutzen bzw. um andererseits eine Überhitzung bzw. zu große Erwärmung des Raumes dahinter zu verhindern, wodurch zusätzlich der Nutzen generiert werden kann, dass allfällige Klimaanlagen nicht mehr oder nur mehr in geringerem Ausmaß benötigt werden, insbesondere auch unter dem Aspekt, dass bereits ein Teil der einfallenden Sonnenstrahlung einer anderweitig Verwendung zugeführt wird, also auf das raumseitige Glaselement nur mehr ein Teil des Sonnenlichtes einwirkt.

In der bevorzugten Ausführung der Erfindung ist die die Sonnenschutzeinrichtung eine Raffstore mit Lamellen. Es wird damit in gewissen Grenzen möglich, den Anteil an nutzbarer Sonnenenergie für die Energiegewinnung durch die Stellung der Lamellen zu steuern bzw. zu regulieren. Die ist insbesondere von Vorteil, wenn die Sonnenergie in elektrischen Strom umgewandelt wird, der in einem Akkumulator zwischengespeichert wird, um die Überladung des Akkumulators auf einfache Weise zu verhindern.

Die Lamellen können dabei als Lichtlenklammellen ausgeführt sein, wodurch nicht nur der Lichteinfall in den Raum verbessert werden kann, sondern auch der für die Energiegewinnung nutzbare Anteil des Sonnenlichtes besser auf einen relativ kleinen Bereich des Fensters oder der Tür umgelenkt werden kann, wodurch der Platzbedarf für die Vorrichtung zur Energiegewinnung aus dem Sonnenlicht reduziert werden kann.

Um den Wirkungsgrad der Energiegewinnung zu verbessern, kann die Sonnenschutzeinrichtung eine Beschichtung aufweisen, die eine im Vergleich zur unbeschichteten Sonnenschutzeinrichtung höhere Reflexionsstärke hat, also damit der Anteil an diffus gestreutem Licht verringert werden kann.

Es besteht auch die Möglichkeit auf der Sonnenschutzeinrichtung Photovoltaikelemente anzuordnen, sodass für die Energiegewinnung einerseits keine zusätzliche Umlenkung des Sonnenlichtes erforderlich ist, und andererseits der Wirkungsgrad der Energiegewinnung verbessert werden kann, indem wiederum je nach Stellung der Sonnenschutzeinrichtung zum einfallenden Licht, insbesondere wenn diese als Raffstore mit Lamellen ausgeführt ist, der Einfallswinkel für das Sonnenlicht optimiert werden kann, wobei dies auch tageszeit- und jahreszeitabhängig erfolgen kann. Zudem kann damit die Energie aus der Sonnenstrahlung in elektrischen Strom umgewandelt werden, wodurch der Energiebedarf einer Klimaanlage zumindest teilweise gedeckt werden kann, insbesondere da durch das im Sommer raumseitig anordenbare Glaselement mit der schlechteren Wärmeleitung bereits eine Überwärmung des Raumes reduziert werden kann, wodurch der Energiebedarf einer Klimaanlage bereits reduziert werden kann.

Es besteht aber auch die Möglichkeit, dass im oder am Flügelrahmen ein Wärmeabsorber angeordnet ist, um damit die Sonnenenergie nicht zwangsweise in elektrischen Strom umwandeln zum müssen. Durch die Absorption insbesondere der kurzwelligen Strahlung entsteht dabei Wärme, die zwar von der Oberfläche des Wärmeabsorbers teilweise wieder als Wärmestrahlung abgestrahlt werden kann, allerdings aufgrund des raumseitig anordenbaren Glaselementes mit der schlechteren Wärmeleitung als das außenseitig anordenbare Glaselement nicht bzw. nur in geringem Ausmaß in den Raum hinter dem Fenster oder der Tür abgeleitet wird, sondern im Zwischenraum zwischen den Glaselementen bis zur Nutzung als "sekundäre" Energiequelle verbleibt, da durch das von außen einfallende Licht eine Ableitung nach außen ebenfalls zumindest großteils verhindert wird. Es kann damit also die Energieausbeute verbessert werden.

Um die Handhabung des Wendefensters oder der Wendetür für den Endverbraucher zu erleichtern, kann vorgesehen sein, dass der gesamte Flügelrahmen um zumindest 180 ° wendbar am Blendrahmen gelagert ist.

Andererseits besteht aber auch die Möglichkeit, dass die beiden Glaselemente jeweils von einem eigenen Rahmen gehaltert sind, und die beiden Rahmen abnehmbar oder drehbar am Flügelrahmen oder am Blendrahmen angeordnet sind, wodurch sich der Wendemechanismus vereinfachen lässt, und damit auch eine Einfachere Abdichtung des Fensters oder der Tür gegen Schlagregen bzw. Winddruck möglich ist.

In der bevorzugten Ausführung umfasst die Mehrfachverglasung eine zumindest zwei Glasscheiben aufweisende Isolierglasverbundscheibe und zumindest eine Einzelglasscheibe, um die unterschiedliche Wärmedurchlässigkeit bzw. Lichtdurchlässigkeit zu erreichen, da bekanntlich mit Isolierglasverbundscheiben relativ niedrige Wärmedurchgangskennwerte erreicht werden können.

Es besteht dabei zudem die Möglichkeit, dass eine der Einzelglasscheibe zugewandte Glasscheibe der Isolierglasverbundscheibe eine größere Dicke aufweist als die zweite Glasscheibe der Isolierglasverbundscheibe um den Effekt der unterschiedlichen Wärmedurchlässigkeit bzw. Lichtdurchlässigkeit zu verbessern bzw. um damit die Wärmedurchlässigkeit der Isolierglasverbundscheibe bereits im Bereich der Sonnenschutzeinrichtung zu reduzieren, bezogen auf die Gesamtwärmedurchlässigkeit der Isolierglasverbundscheibe, wodurch die Effektivität des Wendefensters oder der Wendetür gesteigert werden kann.

Zum besseren Verständnis der Erfindung wird diese anhand der nachfolgenden Figuren näher erläutert.

Es zeigen jeweils in schematisch vereinfachter Darstellung:
- Fig. 1: einen Ausschnitt aus einem Wendefenster im Querschnitt in der Winterstellung;
- Fig. 2: einen Ausschnitt aus dem Wendefenster nach Fig. 1 im Querschnitt in der Sommerstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfindungsgemäße Lösungen darstellen.

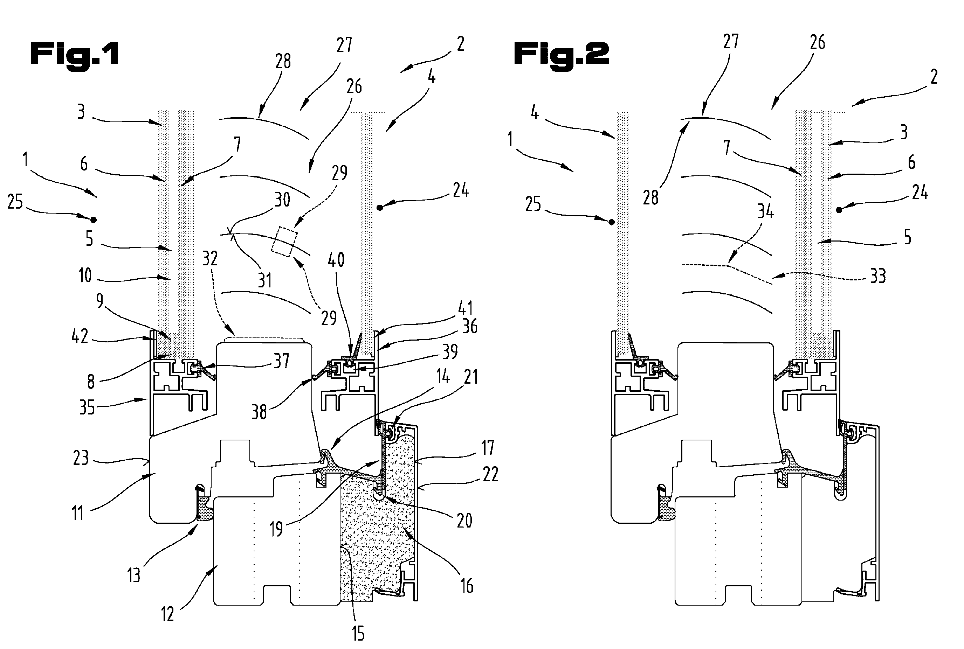

Die Fig. 1 und 2 zeigen jeweils einen Ausschnitt im Querschnitt aus einem Wendefenster 1 in der Sommerstellung (Fig. 1) bzw. der Winterstellung (Fig. 2). Dieses Wendefenster 1 kann ebenso als Wendetür, beispielsweise als Terrassentür oder Balkontür, ausgeführt sein.

Das Wendefenster 1 kann als Kipp-, Dreh- oder Dreh-/Kipp-Fenster ausgeführt sein.

Das Wendefenster 1 weist eine Mehrfachverglasung 2 auf, umfassend ein erstes Glaselement 3 sowie ein zweites Glaselement 4. Die beiden Glaselemente weisen im Vergleich zueinander eine unterschiedliche Wärmedurchlässigkeit und/oder unterschiedliche Lichtdurchlässigkeit auf. Insbesondere ist das erste Glaselement 3 als sogenannte Isolierglasverbundscheibe 5 ausgeführt mit einer ersten Glasscheibe 6 und einer zweiten Glasscheibe 7, die beabstandet zueinander sind, wobei im Randbereich dieses Glaselementes 3 zwischen den Glasscheiben 6, 7 ein so genannter Randverbund 8 aus den hierfür üblichen Werkstoffen zusammen mit einem gegebenenfalls angeordneten Abstandhalter 9 ausgebildet ist. Ein Zwischenraum 10 zwischen den beiden Glasscheiben 6, 7 kann bei Bedarf auch gasgefüllt sein, beispielsweise mit einem Edelgas, wie dies aus dem Stand der Technik für derartige Isolierglasverbundscheiben 5 bekannt ist.

Das zweite Glaselement 4 ist als Einzelglasscheibe ausgeführt.

Selbstverständlich besteht die Möglichkeit, dass einerseits die Isolierglasverbundscheibe 5 mehr als zwei Glasscheiben 6, 7 umfasst, beispielsweise drei oder vier, und dass neben dem als Einzelglasscheibe ausgeführten Glaselement 4 zumindest eine weitere Einzelglasscheibe angeordnet ist.

Die Mehrfachverglasung 2 ist in einem oder an einem durchgängig umlaufenden Flügelrahmen 11 gehaltert, der seinerseits an einem Blendrahmen 12, der umlaufend an dem äußeren Umfang des Flügelrahmens 11 angeordnet und mit dem Gebäude, in dem das Wendefenster 1 angeordnet wird, verbunden ist, dichtend anschlägt, wozu am Flügelrahmen 11 und/oder am Blendrahmen 12 Dichtelemente 13, 14 angeordnet sein können.

An einer äußeren Oberfläche 15, die der Außenatmosphäre des Wendefensters 1 zugewandt ist, kann am Blendrahmen 12 ein Dämmelement 16, insbesondere Schaumstoff, angeordnet sein, das bevorzugt eine Höhe aufweist, dass zumindest ein Teil des Flügelrahmens 11 überdämmt wird. Dieses Dämmelement 16 kann damit mit der Oberfläche 15 des Blendrahmens 12 verklebt sein, ebenso besteht die Möglichkeit, zusätzliche Befestigungselemente anzuordnen, wobei in diesem Fall das Dichtelement 14 auch die Funktion eines Befestigungselementes für das Dämmelement 16 erfüllen kann. An einer äußeren Oberfläche 17 kann zudem eine Vorsatzschale 18, beispielsweise aus Aluminium oder einer Aluminiumlegierung, angeordnet sein, wobei diese Vorsatzschale 18 wiederum über Befestigungselemente 19, welche einerseits in eine Nut 20 des Dämmelementes 16 und andererseits in eine Nut 21 der Vorsatzschale 18 eingreifen, angeordnet werden, wobei in der speziellen Ausführung nach Fig. 1 dieses Befestigungselement 19 in Klemmverbindung mit dem Dichtelement 14 in der Nut 20 gehalten wird.

Der Flügelrahmen 11 und/oder der Blendrahmen 12 können aus Holz, Kunststoff, Metall, insbesondere auch als Hohlkammerprofil, oder aus einem Holzwerkstoff, beispielsweise einem so genannten WPC-Werkstoff (Wood-Plastic-Composite) gefertigt sein und gegebenenfalls auch Verstärkungselemente, das heißt Verstärkungsprofile im Falle der Ausführung als Hohlkammerprofil, aufweisen, wie dies für derartige Profile zur Herstellung von Fenstern aus dem Stand der Technik bekannt ist.

Wie bereits einleitend dargestellt, ist es Sinn einer derartigen Konstruktion für ein Wendefenster 1, die Glaselemente 3, 4 mit der unterschiedlichen Wärmedurchlässigkeit und/oder Lichtdurchlässigkeit wahlweise in ihrer relativen Lage zu einer ersten, äußeren Oberfläche 22 bzw. einer zweiten inneren Oberfläche 23 des Wendefensters 1 vertauschbar anordnen zu können, sodass also die beiden Glaselemente 3, 4 wahlweise einer Außenseite 24 oder einer Innenseite 25 zu dem Raum des Gebäudes hinter dem Wendefenster 1, zugewendet werden können, um damit jahreszeitlich bedingte Temperaturunterschiede aufgrund der unterschiedlichen Wärmedurchlässigkeiten der Glaselemente 3, 4 besser berücksichtigen zu können.

Erfindungsgemäß ist nun vorgesehen, dass zwischen diesen beiden Glaselementen 3, 4 eine Sonnenschutzvorrichtung 26 angeordnet ist. Insbesondere ist diese Sonnenschutzvorrichtung 26 bei der Ausführungsvariante nach den Fig. 1 und 2 als Raffstore 27 mit Lamellen 28 ausgebildet. Die Sonnenschutzvorrichtung 26, also insbesondere die Raffstore 27, kann dabei am oberen Profil des Flügelrahmens 11 ― in Einbaulage des Wendefensters 1 betrachtet ― angeordnet und befestigt sein. Insbesondere besteht auch die Möglichkeit, dass die Sonnenschutzvorrichtung 26 mit einer Antriebsvorrichtung zum automatischen Absenken bzw. Heben der Sonnenschutzvorrichtung 26 ausgebildet ist.

Die Sonnenschutzvorrichtung 26 dient erfindungsgemäß nicht nur der Abschattung des dahinter liegenden Raumes, sondern auch vornehmlich dazu, um aus der auf das Wendefenster 1 bzw. in das Wendefenster 1 eintretenden Sonnenstrahlung Energie nutzbar zu gewinnen. Dabei kann die Energie in Form von elektrischem Strom oder in Form von Wärme gewonnen werden. In der ersten Ausführungsvariante, also zur Nutzung der Sonnenenergie in Form von elektrischem Strom, können die Lamellen 28 der Raffstore 27 bzw. kann die Sonnenschutzvorrichtung 26 ein oder mehrere Fotovoltaikelemente 29 aufweisen, wie dies in Fig. 1 strichliert angedeutet ist. Das oder die Fotovoltaikelemente 29 können sowohl an einer Oberseite 30 als auch an einer Unterseite 31 der Lamellen 28 bzw. nur an der Oberseite 30 oder nur an der Unterseite 31 angeordnet werden bzw. bei anderen Sonnenschutzvorrichtungen 26 an der Vorderseite und/oder der Rückseite dieser Sonnenschutzvorrichtung 26. Die für die Stromgewinnung aus Sonnenstrahlung erforderliche Elektronik sowie möglicherweise Stromspeichervorrichtungen, insbesondere Akkumulatoren, können dabei über eine entsprechende Verdrahtung oder mittels Schleifkontakten mit den Fotovoltaikelementen 29 verbunden sein und zumindest teilweise im Flügelrahmen 11 und/oder zumindest teilweise im Blendrahmen 12 und/oder zumindest teilweise in dem das Wendefenster 1 umgebenden Mauerwerk des Gebäudes angeordnet sein. Selbstverständlich besteht auch die Möglichkeit einer freistehenden Anordnung. Die Führung der elektrischen Kontakte kann beispielsweise über das Aufzugsband bzw. die Aufzugsbänder oder die Kordel zur Verstellung des Winkels der Lamellen 28, also beispielsweise eine Leiterkordel, erfolgen.

Alternativ dazu und/oder zusätzlich dazu besteht die Möglichkeit, derartige Fotovoltaikelemente 29 an einer der Sonnenschutzvorrichtung 26 zugewandten Oberfläche des Flügelrahmens 11 anzuordnen.

Die Fotovoltaikelemente 29 können als Beschichtung auf die Sonnenschutzvorrichtung 26, also beispielsweise die Lamellen 28, oder die entsprechende Oberfläche des Flügelrahmens 11 aufgetragen sein. Ebenso besteht die Möglichkeit diese Fotovoltaikelemente 29 als gesonderte Elemente an diesen Oberflächen anzuordnen, insbesondere damit zu verbinden.

Mit Hilfe der Sonnenschutzvorrichtung 26, insbesondere der Raffstore 27, besteht die Möglichkeit, dass die Fotovoltaikelemente 29 durch Verschwenken der Lamellen 28 dem jeweiligen Sonnenstand entsprechend nachgeführt werden, sodass der Wirkungsgrad dieser Stromgewinnung verbessert werden kann. Andererseits kann bei einer Anordnung der Fotovoltaikelemente 29 beispielsweise an der Oberfläche des Flügelrahmens 11 das einfallende Sonnenlicht derart durch Reflexion umgelenkt werden, dass dieses auf die Oberfläche der Fotovoltaikelemente 29 fällt.

Für den Fall, dass die Sonnenschutzvorrichtung 26 lediglich der Umlenkung der einfallenden Sonnenstrahlung durch Reflexion dient, besteht die Möglichkeit, dass diese Sonnenschutzvorrichtung 26 mit einer Beschichtung versehen ist, die dem Wirkungsgrad der Reflexion verbessert. Diese Beschichtung kann beispielsweise durch ein Metall oder eine Metalllegierung oder eine Verspiegelung gebildet sein. Es besteht zudem die Möglichkeit, dass mit der Beschichtung eine Oberflächentopographie ausgebildet wird, die ebenfalls eine verbesserte Reflexion des einfallenden Sonnenlichts ermöglicht.

In der zweiten Variante der Nutzung der Sonnenenergie in Form von Wärme besteht die Möglichkeit, dass auf der in Richtung auf die Sonnenschutzvorrichtung 26 gerichteten Oberfläche des Flügelrahmens 11 zumindest teilweise ein Wärmeabsorber 32 angeordnet ist, wie dies in Fig. 1 ebenfalls strichliert dargestellt ist. Ebenso besteht die Möglichkeit, dass derartige Wärmeabsorber 32 auch an der Sonnenschutzvorrichtung 26 selbst angeordnet sind. Dieser Wärmeabsorber 32 kann beispielsweise als lichtabsorbierende Beschichtung, insbesondere aus einem Metall oder Metalllegierung, auf den Flügelrahmen 11 bzw. die Sonnenschutzvorrichtung 26, aufgebracht werden, wobei hier insbesondere eine hohe Wärmeleitung des Wärmeabsorbers 32 zur Abführung der gewonnenen Wärme zu einem Wärmespeicher bzw. Wärmetauscher von Vorteil ist. Andererseits besteht die Möglichkeit, dass ein fluiddurchströmter Wärmeabsorber 32, insbesondere ein wasserdurchströmter Wärmeabsorber 32, verwendet wird, wobei die gewonnene Wärme wiederum einem Wärmespeicher bzw. einem Wärmetauscher zur weiteren Nutzung zugeführt werden kann.

Es besteht weiters die Möglichkeit, dass unterhalb des Wärmeabsorbers 32 eine Reflexionsschicht angeordnet ist, sodass durch den Wärmeabsorber 32 hindurchtretendes Licht wieder in diesen einfallend umgelenkt wird.

Im Falle der Stromgewinnung kann der Strom zur Ausbildung eines autarken Wendefensters 1, das heißt zum Antrieb der an dem Wendefenster 1 angeordneten, elektrischen Motoren, beispielsweise der Antriebsvorrichtung für die Sonnenschutzvorrichtung 26, verwendet werden, ebenso kann dieser natürlich auch für andere Zwecke, beispielsweise zur Einspeisung in eine Klimaanlage, verwendet werden.

Gemäß einer besonderen Ausführungsvariante der Lamellen 28 der Raffstore 27 können diese als so genannte Lichtlenklamellen 33 (in Fig. 2 strichliert dargestellt) ausgeführt sein. Dazu können die Lichtlenklamellen 33 im Verlauf ihrer Oberfläche zumindest eine Abkantung 34 aufweisen, die sich in Längserstreckung der Lichtlenklamelle 33 erstreckt, sodass also das Lamellenblatt der Lichtlenklamelle 33 in zwei Bereiche unterteilt wird, die hinsichtlich der einfallenden Sonnenstrahlung in einem unterschiedlichen Winkel zu dieser angeordnet werden können. Es ist damit einerseits der Lichteinfall in den Raum verbesserbar, andererseits kann damit auch der Anteil des einfallenden Sonnenlichts zur Energiegewinnung aus diesem erhöht werden. Selbstverständlich können dabei auch mehrere derartige Abkantungen 34 pro Lamellenblatt angeordnet werden, um diesen Effekt noch zu verbessern.

Um die Wendbarkeit der beiden Glaselemente 3, 4 zu ermöglichen, kann der gesamte Flügelrahmen 11 um zumindest 180° wendbar am Blendrahmen 12 angeordnet sein. Dazu kann der Flügelrahmen 11 über eine horizontale oder vertikale Drehachse mit dem Blendrahmen 12 verbunden sein.

Andererseits besteht die Möglichkeit, dass die beiden Glaselemente 3, 4 einzeln abnehmbar am Flügelrahmen 11 befestigt sind und so die relative Stellung zur Außenseite 24 bzw. Innenseite 25 verändert werden kann. Es besteht aber auch die Möglichkeit, dass die beiden Glaselemente 3, 4 abnehmbar und/oder drehbar am Blendrahmen 12 befestigt sind, insbesondere wenn das Wendefenster 1 als so genannte Fixverglasung ausgeführt ist.

Bei der Ausführung des Wendefensters 1 mit getrennt abnehmbaren und/oder drehbaren Glaselementen 3, 4 können diese, wie dies in den Fig. 1 und 2 dargestellt ist, von jeweils eigenen Profilelementen 35, 36, beispielsweise aus Kunststoff oder Metall, aufgenommen und diese am Flügelrahmen 11 gehalten sein. Es wird damit erreicht, dass die Dichtebene zwischen dem Flügelrahmen 11 und dem Blendrahmen 12 im Bereich des Falzes zwischen diesen beiden Elementen konstruktiv einfacher mit aus dem Stand der Technik bekannten Maßnahmen ausgeführt werden kann. Diese beiden Profilelemente 35, 36 können ihrerseits wieder über Dichtelemente 37, 38, insbesondere Dichtlippen, am Flügelrahmen 11 anliegen, um damit die entsprechende Dichtheit zu erreichen.

Insbesondere ist dabei von Vorteil, wenn diese beiden Profilelemente 35, 36 gleichartig ausgeführt sind, also den gleichen Querschnitt aufweisen, wie dies in den Fig. 1 und 2 dargestellt ist, da damit der die Konstruktion des Wendefensters 1 vereinfacht werden kann. Um bei dieser Ausführungsvariante die Halterung der Einzelglasscheibe in dem Profilelement 36 zu ermöglichen, weist das Profilelement 36 in der auf das Glaselement 4 zugewandten Oberfläche eine Nut 39 auf, in die ein Halteprofil 40 eingeführt werden kann, insbesondere aus Kunststoff. Mit diesem Halteprofil 40 kann das durch die Einzelglasscheibe gebildete Glaselement 4 gegen eine Klebefläche 41 bzw. ein weiteres Dichtelement zwischen dem Glaselement 4 und dem Profil 36 gepresst werden.

Das durch die Isolierglasverbundscheibe 5 gebildete Glaselement 3 liegt ebenfalls an einer Klebefläche 42 bzw. einem Dichtelement zwischen dem Profilelement 35 und dem Glaselement 3 an, wobei in diesem Fall an den Stirnseiten der Isolierglasverbundscheibe 5 ebenfalls eine Klebefläche zur Verbindung mit dem Profilelement 35 ausgebildet sein kann.

Es besteht aber auch die Möglichkeit, dass die beiden Profilelemente 35, 36 umlaufende Nuten zur Ausbildung eines Glaseinstandes zur Aufnahme der Glaselemente 3 bzw. 4 aufweisen. Auch in diesem Fall wird die Einzelglasscheibe, also das Glaselement 4 mit einem Halteelement gegen eine Oberfläche dieses Glaseinstandes gepresst, um damit wiederum den Vorteil zu erreichen, dass die beiden Profilelemente 35, 36 den gleichen Querschnitt aufweisen können.

Nach einer Ausführungsvariante ist vorgesehen, dass, wie dies in den Fig. 1 und 2 dargestellt ist, eine der beiden Glasscheiben 6, 7 der Isolierglasverbundscheibe 5 eine größere Dicke aufweist als die jeweils zweite Glasscheibe 6, wie dies bereits voranstehend ausgeführt und begründet wurde.

Die Isolierglasverbundscheibe 5, also das Glaselement 3 kann beispielsweise einen U-Wert von ungefähr 0,5 aufweisen, die Einzelglasscheibe des Glaselementes 4 einen U-Wert von ca. 1,5.

Die Ausführungsbeispiele zeigen mögliche Ausführungsvarianten des Wendefensters 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständnis des Aufbaus des Wendefensters 1 dieses bzw. dessen Bestandteile teilweise unmaßstäblich und/oder vergrößert und/oder verkleinert dargestellt wurden.

### Bezugszeichenaufstellung

- 1: Wendefenster
- 2: Mehrfachverglasung
- 3: Glaselement
- 4: Glaselement
- 5: Isolierglasverbundscheibe

- 6: Glasscheibe
- 7: Glasscheibe
- 8: Randverbund
- 9: Abstandhalter
- 10: Zwischenraum

- 11: Flügelrahmen
- 12: Blendrahmen
- 13: Dichtelement
- 14: Dichtelement
- 15: Oberfläche

- 16: Dämmelement
- 17: Oberfläche
- 18: Vorsatzschale
- 19: Befestigungselement
- 20: Nut

- 21: Nut
- 22: Oberfläche
- 23: Oberfläche
- 24: Außenseite
- 25: Innenseite

- 26: Sonnenschutzvorrichtung
- 27: Raffstore
- 28: Lamelle
- 29: Fotovoltaikelement
- 30: Oberseite

- 31: Unterseite
- 32: Wärmeabsorber
- 33: Lichtlenklamelle
- 34: Abkantung
- 35: Profilelement

- 36: Profilelement
- 37: Dichtelement
- 38: Dichtelement
- 39: Nut
- 40: Halteprofil

- 41: Klebefläche
- 42: Klebefläche

## Patentansprüche

1. Wendefenster (1) oder Wendetür mit einem Blendrahmen (12) und einem Flügelrahmen (11), der auf die Einbaulage eines Fensters oder einer Tür bezogen eine erste, äußere Oberfläche (22) und eine zweite, innere, der ersten Oberfläche (22) gegenüberliegende Oberfläche (23) aufweist, und der eine Mehrfachverglasung (2) stützt, die zumindest zwei Glaselemente (3, 4) mit unterschiedlicher Wärmedurchlässigkeit und/oder Lichtdurchlässigkeit aufweist, die in ihrer relativen Lage zur ersten, äußeren Oberfläche (22) und zur zweiten, inneren Oberfläche (23) vertauschbar am Flügelrahmen (22) oder am Blendrahmen (23) gehaltert sind, **dadurch gekennzeichnet, dass** zwischen den Glaselementen (3, 4) eine Sonnenschutzeinrichtung (26) angeordnet ist.

2. Wendefenster (1) oder Wendetür nach Anspruch 1, **dadurch gekennzeichnet, dass** die Sonnenschutzeinrichtung (26) eine Raffstore (27) mit Lamellen (28) ist.

3. Wendefenster (1) oder Wendetür nach Anspruch 2, **dadurch gekennzeichnet, dass** die Lamellen (28) als Lichtlenklammellen (33) ausgeführt sind.

4. Wendefenster (1) oder Wendetür nach einem der Ansprüche 1 bis 3, **dadurch gekennzeichnet, dass** die Sonnenschutzeinrichtung (26) eine Beschichtung aufweist.

5. Wendefenster (1) oder Wendetür nach einem der Ansprüche 1 bis 4, **dadurch gekennzeichnet, dass** auf der Sonnenschutzeinrichtung (26) Fotovoltaikelemente (29) angeordnet sind.

6. Wendefenster (1) oder Wendetür nach einem der Ansprüche 1 bis 5, **dadurch gekennzeichnet, dass** im oder am Flügelrahmen (11) ein Wärmeabsorber (32) angeordnet ist.

7. Wendefenster (1) oder Wendetür nach einem der Ansprüche 1 bis 6, **dadurch gekennzeichnet, dass** der gesamte Flügelrahmen (11) um zumindest 180 ° wendbar am Blendrahmen (12) gelagert ist.

8. Wendefenster (1) oder Wendetür nach einem der Ansprüche 1 bis 7, **dadurch gekennzeichnet, dass** die beiden Glaselemente (3, 4) jeweils von einem eigenen Rahmen aus Profilelementen (35, 36) gehaltert sind, und die beiden Rahmen abnehmbar oder drehbar am Flügelrahmen (11) oder am Blendrahmen (12) angeordnet sind.

9. Wendefenster (1) oder Wendetür nach einem der Ansprüche 1 bis 8, **dadurch gekennzeichnet, dass** die Mehrfachverglasung (2) eine zumindest zwei Glasscheiben (6, 7) aufweisende Isolierglasverbundscheibe (5) und zumindest eine Einzelglasscheibe als Glaselemente (3, 4) umfasst.

10. Wendefenster (1) oder Wendetür nach Anspruch 9, **dadurch gekennzeichnet, dass** eine der Einzelglasscheibe zugewandte Glasscheibe (7) der Isolierglasverbundscheibe (5) eine größere Dicke aufweist als die zweite Glasscheibe (6) der Isolierglasverbundscheibe (5).
